# EUROPÄISCHE PATENTANMELDUNG

(11) **EP 2 270 961 A2**
(43) Veröffentlichungstag der Anmeldung: **05.01.2011**
(21) Anmeldenummer: 10012846.1
(22) Anmeldetag: 28.01.1998
(51) Int. Cl.: H02K 11/04

(54) **Elektromotor mit vorgeschaltetem Frequenzumrichter**

(30) Priorität: 05.02.1997 DE 19704226
(62) Teilanmeldung aus: 04002173.5
(71) Anmelder: SEW-EURODRIVE GmbH & Co. KG, 76646 Bruchsal (DE)
(72) Erfinder: Roth Stielow, Jörg, 75015 Bretten (DE); Schmidt, Josef, 76675 Graben-Neudorf (DE)
(74) Vertreter: Bohnenberger, Johannes

(57) **Zusammenfassung**

Die Erfindung betrifft einen Elektromotor, umfassend einen Frequenzumrichter (7) mit einer Signalelektronik und einer Leistungselektronik mit Leistungsendstufe (11) zur Drehzahlsteuerung des Elektromotors (1); ein Gehäuse (6) des Frequenzumrichters (7), das mit einem Kühlkörper versehen ist; ein am Gehäuse (2) des Elektromotors (1) angeordnetes Zwischenteil (5), welches einen ansonsten dort angeordneten Klemmenkasten ersetzt und Anschlusselemente aufnimmt; einen mit dem Zwischenteil (5) verbundenen Steckverbinder (14) und einen mit dem Frequenzumrichter (7) verbundenen Steckverbinder (13) zum Schaffen einer elektrischen Verbindung zwischen dem Frequenzumrichter (7) und dem Zwischenteil (5), wobei das Gehäuse (6) des Frequenzumrichters in Form eines Deckteils ausgebildet ist und das Zwischenteil (5) auf dessen Oberseite abschließt, die Signalelektronik und die Leistungselektronik im Gehäuse (6) des Frequenzumrichters angeordnet sind, die Leistungselektronik mit dem Kühlkörper verbunden ist und zwischen dem den Frequenzumrichter aufnehmenden Deckteil und dem Zwischenteil (5) eine Wärmesperre vorgesehen und/oder das Zwischenteil (5) als Wärmesperre ausgebildet ist, sowie eine zwischen dem Deckteil und dem Kühlkörper (8) vorgesehene Wärmesperre und/oder Feuchtigkeitssperre.

## Beschreibung

### Die Erfindung betrifft einen Elektromotor.

Unter einem Umrichter wird ein Umformer verstanden, welcher die Netzspannung mit konstanter Frequenz und Spannung in ein Drehspannungssystem mit variabler Frequenz und variabler Spannung überführt. Dieses Drehspannungssystem wird dem anzutreibenden Drehstrommotor (Asynchronmaschine) zugeführt, um so die Drehzahl des Elektromotors durch entsprechende Wahl der Ausgangsfrequenz des Umrichters vorzugeben.

Im Gegensatz zur herkömmlichen Anordnung, bei der der Umrichter als separate Einheit in einem Schaltschrank angeordnet ist und über eine Motorzuleitung von bis zu 100 m Länge den Elektromotor speist, sind bereits Elektromotoren bekannt, bei denen die den Elektromotor steuernde Signal- und Leistungselektronik in den Elektromotor als mechanische Einheit integriert ist. Hierdurch soll dann der vorher erforderliche Schaltschrankplatzbedarf eingespart werden und außerdem eine Verringerung der EMV-Problematik erfolgen, welche bei der herkömmlichen Anordnung durch Abstrahlung aufgrund der langen Motorzuleitungen von bis zu 100 m Länge verursacht wird. Zur Integration des Frequenzumrichters in den Elektromotor ist dabei zum Einen vorgesehen, dessen Elektronik in einen der Klemmenkästen des Elektromotors einzubauen. Die Anschlusselemente wie Klemmen und/oder Stecker für Versorgungs- und Signalleitungen sind auch weiterhin innerhalb des Klemmenkastens angeordnet. Eine solche Anordnung, bei welcher der Frequenzumrichter und der Elektromotor baulich miteinander verbunden sind, hat insbesondere im Hinblick auf die Fertigungstechnik und die damit verbundenen Herstellungskosten zahlreiche Vorteile. Probleme jedoch bereitet die Kühlung des Frequenzumrichters, da insbesondere die Leistungsendstufe der Leistungselektronik hohe Verlustwärme erzeugt. Um diese Verlustwärme des Frequenzumrichters abzuleiten, muss an den Elektromotor B-seitig (die B-Seite ist die dem abtreibenden Motorwellenende abgewandte Seite) eine separate Sonderlüfterhaube mit Lüfter angebaut werden, wobei dieser Lüfter durch den Elektromotor selber oder aber durch einen zusätzlichen separaten Lüftermotor angetrieben wird.

Anstelle der Integration des Frequenzumrichters im Klemmenkasten kann das Gehäuse des Frequenzumrichters auch B-seitig an den Elektromotor angebaut werden. Auch hier muss zur Ableitung der Verlustwärme des Frequenzumrichters B-seitig an den Elektromotor ein Lüfter angebaut werden, welcher auch hier durch den Elektromotor selbst oder aber einen separaten Lüftermotor angetrieben wird. Bei dieser Variante sind dann lediglich die Anschlusselemente wie Klemmen und/oder Stecker für Versorgungs- und Signalleitungen in einem oder mehreren Klemmenkästen untergebracht, so dass diese ihre Standardgröße beibehalten. Jedoch wird durch den Einbau der Elektronik an das B-seitige Ende des Elektromotors nun die Baulänge des Elektromotors vergrößert. Eine weitere Vergrößerung der Baulänge erfolgt durch die notwendige Sonderlüfterhaube. Wenn kein Lüfter vorgesehen wird, muss die Elektronik für hohe Temperaturen ausgelegt sein, es können also spezielle hochtemperaturbeständige elektronische Bauelemente eingesetzt werden.

Aufgrund der beschriebenen Sonderteile bei Integration des Umrichters im Elektromotor kann kein einfacher Standardmotor verwendet werden. Es sind zur Anbringung von Frequenzumrichter sowie Sonderlüfterhaube und ggf. Lüftermotor Sonderkonstruktionen am Elektromotor notwendig. Außer dem durch den zusätzlichen Lüfter verursachten Platzbedarf treten hier noch zusätzlich störende Lüftergeräusche auf, und der Energieaufwand für den Lüfter als aktives Kühlelement ist äußerst hoch. Der für den Lüfter notwendige separate Motor stellt außerdem ein teures Bauteil dar.

Die DE 94 15 935 U1 zeigt einen Elektromotor eines Pumpenaggregats mit einem metallischen Klemmkasten mit darin befindlicher Elektronik, wobei im Boden des Klemmkastens sowie dazu fluchtend im Motorgehäuse je eine Ausnehmung angeordnet sind, durch die eine Steckverbindung geführt ist, welche die elektrischen Anschlüsse des Motors zum Klemmenkasten bildet. Weiterhin ist dieser durch eine zwischen seinem Boden und dem Motorgehäuse angeordnete Kunststoffplatte elektrisch und thermisch isoliert, wozu die an sich zylindrische Kontur des Motorgehäuses zu einer planen Anschlussfläche für den Klemmenkasten abgeflacht sein muss. Der Klemmenkasten weist eine sich bodenparallel erstreckende Platine auf, welche wärmeabgebende Leistungselektronik trägt, die wärmeleitend mit den Seitenwänden des Klemmenkastens verbunden ist. Senkrecht zu dieser steht die vom Gehäuse mit Anschlusskontakten herausragende wärmeempfindliche Elektronik tragende Platine. Nachteilig ist, dass sowohl keine wirksame Wärmeabfuhr der Leistungselektronik und auch keine hinreichende Entkopplung zwischen Steuerelektronik und Leistungselektronik gegeben ist, da Letztere zum Teil unmittelbar neben der die wärmeempfindliche Steuerelektronik tragenden Platine angeordnet ist.

Die DE-AS 12 20 042 zeigt einen Motor mit einem in einem Gehäuse untergebrachten, aus mehreren Ventilen (Gleichrichtern) bestehenden Gleichrichteraggregat, wobei die Ventile auf in ein hohlrippiges Gehäuses ragenden Kühlplatten angeordnet und von einer Vergussmasse umschlossen sind. Die Druckschrift zeigt damit eine Möglichkeit zur 10 Kühlung eines in einem Klemmenkasten angebrachten Gleichrichteraggregats.

Die EP 456 169 AI betrifft einen von einem Frequenzumrichter gespeisten Elektromotor mit einem Motorgehäuse und daran angeordneten Klemmenkasten, wobei der Frequenzumrichter eine bauliche Einheit mit dem Motor bildet und sein Leistungsteil im Klemmenkasten angeordnet ist . Die innerhalb des Leistungsteils entstehende Wärme wird durch eine Gehäusedurchbrechung an der Unterseite des Klemmenkastens über einen mit Kühlrippen versehenen Wärmeteiler in einen durch den Ventilator des Motors ausgesetzten Bereich geleitet und damit gekühlt. Die Druckschrift zeigt daher eine alternative Möglichkeit zur Kühlung der in Leistungselektronik entstehenden Abwärme.

Der Erfindung liegt die Aufgabe zu Grunde einen Elektromotor zu schaffen, bei dem der Frequenzumrichter einfach und kostengünstig ohne aufwändige Sonderteile am Elektromotor integriert werden kann.

Erfindungsgemäß wird die genannte Aufgabe durch einen Elektromotor mit einem Frequenzumrichter nach Anspruch 1 gelöst.

Herkömmliche Elektromotoren sind mit einem Klemmenkasten bzw. Anschlussstellen für einen Solchen versehen. Beim erfindungsgemäßen Elektromotor mit integriertem Frequenzumrichter erfolgt der Anschluss des Frequenzumrichters über ein den Klemmenkasten ersetzendes Zwischenteil; hierdurch sind das Gehäuse des Frequenzumrichters und das Gehäuse des Zwischenteils voneinander getrennt. Ein derartiger Frequenzumrichter kann daher auch mittels des Zwischenteils an einem herkömmlichen Elektromotor angebaut werden, da nun die zusätzlichen Bauteile, wie Lüfter und separater Lüftermotor, entfallen. Die Kühlung und damit die Abfuhr der Verlustwärme erfolgt nun mittels eines am Gehäuse des Frequenzumrichters vorgesehenen Kühlkörpers. Es ist also nicht mehr die gesamte Motorbaueinheit zum Zwecke der Kühlung des Frequenzumrichters, insbesondere der Verlustwärme der Leistungsendstufe, durch Sonderkonstruktionen anzupassen, sondern es sind lediglich entsprechende Maßnahmen am Gehäuse des Frequenzumrichters selbst vorzunehmen, beispielsweise die Anpassung der wirksamen Kühlfläche des Kühlkörpers an die Leistungselektronik.

Übliche B-seitige Anbauten von Motoren wie z.B. Lüfter, Geber, Bremsen und/oder Kombinationen hieraus können damit ohne Einschränkungen angebaut werden. Der Frequenzumrichter ist aufgrund der erfindungsgemäßen Ausgestaltung nicht auf einen zusätzlichen Lüfter oder eine besondere Ausführungsform des Lüfters bzw. der Lüfterhaube angewiesen. Die Anschlusselemente wie Klemmen und/oder Stecker für Versorgungs- und Signalleitungen sind nun im Zwischenteil untergebracht und können einfach nach der Demontage des Gehäuses des Frequenzumrichters erreicht werden. Um den Bauraumbedarf für den Elektromotor mit integriertem Frequenzumrichter nicht unnötig zu vergrößern, ist in Weiterbildung vorgesehen, dass das Gehäuse des Frequenzumrichters das Zwischenteil in Längsrichtung überragt und der Kühlkörper unterhalb des Gehäuses seitlich des Zwischenteils angeordnet ist. Vorzugsweise sind dabei die Signalelektronik des Frequenzumrichters oberhalb des Zwischenteils und die Leistungselektronik oberhalb des Kühlkörpers im Gehäuse angeordnet. Auf diese Weise kann dann die von der Leistungselektronik, insbesondere deren Leistungsendstufe, stammende Verlustwärme direkt durch Wärmeleitung an den Kühlkörper weitergegeben wird. Aufgrund der dadurch möglichen Temperaturverhältnisse im Gehäuse des Frequenzumrichters kann dieses im Bereich der Signalelektronik, welche äußerst empfindlich ist, möglichst kühl gehalten werden. Bei den aus dem Stand der Technik bekannten Elektromotoren mit integriertem Frequenzumrichter sind alle Teile gleichwarm, da sie durch das Aufschrauben und Verwenden von Aluminiumlegierungen für das Gehäuse des Frequenzumrichters thermisch gut gekoppelt sind.

Um den Kühlkörper mit der Leistungsendstufe des Frequenzumrichters thermisch gut zu koppeln und damit die Verlustwärme der Leistungsendstufe abzuleiten, ist der Kühlkörper vorzugsweise aus einem Material hoher thermischer Leitfähigkeit. Entsprechend können dann die Leistungshalbleiter der Leistungsendstufe sehr hoch ausgenutzt werden, ohne dass die Signalelektronik Schaden nimmt. Auch kann der Kühlkörper hinsichtlich seines Volumens und seiner wirksamen Kühlfläche sehr kompakt ausgeführt werden. In Weiterbildung ist vorgesehen, dass auch das Gehäuse des Frequenzumrichters aus einem Material hoher thermischer Leitfähigkeit besteht. Entsprechend erfolgt dann die Ableitung der Verlustwärme des integrierten Frequenzumrichters zum einen über die Oberfläche des Gehäuses des Frequenzumrichters, zum anderen über den Kühlkörper und schließlich mittels natürlicher Konvektion und Abstrahlung. Insbesondere kann hierdurch jene Verlustwärme des Frequenzumrichters, welche nicht über den Kühlkörper abführbar ist, effizient über das Gehäuse des Frequenzumrichters an die Umgebungsluft abgegeben werden.

Der Kühlkörper selbst kann zur Vergrößerung seiner Oberfläche durch eine Vielzahl von Kühlrippen oder aber Kühlstäben gebildet sein.

Um den Elektromotor schnell und einfach mit dem jeweils den Einsatzbedingungen angepassten Frequenzumrichter versehen zu können, ist es zweckmäßig, eine lösbare Verbindung zwischen dem Frequenzumrichter und dem Elektromotor vorzusehen, so dass jeweils einander zuzuordnende Einheiten in einfacher Weise, beispielsweise durch eine Steckverbindung, leitungsverbunden werden können, ohne dass hierzu besondere Fachkenntnisse erforderlich sind. Der Frequenzumrichter muss lediglich durch Lösen der Verbindung vom Motor demontiert bzw. am Motor montiert werden. In Weiterbildung sind im Zwischenteil Einrichtungen zur Funkentstörung eingebaut. Auf diese Weise sind keine zusätzlichen externen Einrichtungen zu diesem Zweck notwendig.

In bevorzugter Ausgestaltung wird die thermische Entkopplung zwischen Frequenzumrichter und Elektromotor dadurch erhalten, dass zwischen dem Gehäuse des Frequenzumrichters und dem Kühlkörper und/oder dem Zwischenteil zumindest eine Wärmesperre vorgesehen ist. Eine Wärmesperre zwischen Gehäuse und Kühlkörper reduziert einerseits den direkten Wärmetransport vom Kühlkörper zum Gehäuse des Frequenzumrichters und andererseits auch den indirekten Wärmetransport durch Verminderung der Luftzirkulation im Inneren zwischen dem Kühlkörper und dem Gehäuse des Frequenzumrichters. Ist die Wärmesperre zwischen dem Gehäuse des Frequenzumrichters und dem Zwischenteil vorgesehen, so reduziert sie einerseits den direkten Wärmetransport vom Stator des Motors über das Zwischenteil zum Gehäuse des Frequenzumrichters und andererseits auch den indirekten Wärmetransport durch Verminderung der Luftzirkulation im Inneren zwischen dem Zwischenteil und dem Gehäuse des Frequenzumrichters. In bevorzugter Ausgestaltung sind dabei separate Wärmesperren zwischen dem Gehäuse des Frequenzumrichters und dem Kühlkörper einerseits und dem Zwischenteil andererseits vorgesehen. Entsprechend können die Wärmesperren dann auch aus einem unterschiedlichen Material geringer thermischer Leitfähigkeit ausgeführt sein. Auch ist es von Vorteil, wenn die Wärmesperren den gesamten Anlagebereich zwischen Gehäuse des Frequenzumrichters und Zwischenteil bzw. Kühlkörper flächig abdecken.

In anderer bevorzugter Ausgestaltung ist zwischen dem Gehäuse des Frequenzumrichters und dem Kühlkörper und/ oder dem Zwischenteil zumindest eine Feuchtigkeitssperre vorgesehen. Hierdurch wird der Austausch von Feuchtigkeit zwischen dem Zwischenteil und dem Frequenzumrichter sowie dem Frequenzumrichter und dem Kühlkörper vermindert.

Vorzugsweise bilden dabei die Wärmesperren und Feuchtigkeitssperren eine Funktionseinheit. Entsprechend kann so durch die Wärmesperren der Austausch von Feuchtigkeit zwischen der einen Seite der Wärmesperre und deren anderer Seite im gesamten Erstreckungsbereich zuverlässig vermindert werden.

Anstelle separater Wärmesperren oder aber zusätzlich zu den Wärmesperren ist es möglich, das Zwischenteil aus einem Material geringer thermischer Leitfähigkeit zu fertigen. Auf diese Weise wird nun die Funktion der Wärmesperre vom Zwischenteil übernommen oder aber der Wärmetransport weiter reduziert. Es ist auch möglich, das Gehäuse des Frequenzumrichters als Feuchtigkeitssperre auszubilden, so dass hierdurch der Austausch von Feuchtigkeit zwischen dem Zwischenteil und dem Frequenzumrichter vermindert wird.

Um das Gehäuse des Frequenzumrichters auch nach außen hin abzuschließen, so dass der Einsatz weitgehend unabhängig von örtlichen Gegebenheiten, wie beispielsweise staubhaltiger Atmosphäre etc., ist, umgeben die Wärme- und/ oder Feuchtigkeitssperren das Gehäuse des Frequenzumrichters vorzugsweise dichtend. Durch diese multifunktionale Ausprägung kann besonders kostengünstig eine hohe Schutzart gegenüber von außen eindringenden Flüssigkeiten und/oder Staub erreicht werden.

Ein besonders kostengünstiger und einfach zu demontierender bzw. montierender Aufbau lässt sich erreichen, wenn das Gehäuse des Frequenzumrichters in Form eines Deckteils ausgebildet ist, welches auf das Zwischenteil als Unterteil dieses verschließend aufsetzbar ist. So ist ein einfacher Austausch der Frequenzumrichter einerseits möglich, und zum Anderen kann das Zwischenteil als einfacher Klemmenkasten nach Abnahme und Aufsetzen eines anderen Deckels genutzt werden.

Weitere Vorteile und Merkmale der Erfindung ergeben sich aus den Ansprüchen und aus der nachfolgenden Beschreibung, in der Ausführungsbeispiele unter Bezugnahme auf die Zeichnung im einzelnen erläutert werden. Dabei zeigt:
- Fig. 1: eine Seitenansicht eines erfindungsgemäßen Elektromotors mit einem integrierten Frequenzumrichter in einer ersten Ausführungs- form;
- Fig. 2: einen Querschnitt durch den Frequenzumrichter aus Fig. 1;
- Fig. 3: einen erfindungsgemäßen Elektromotor mit integriertem Fre- quenzumrichter in einer zweiten Ausführungsform; und
- Fig. 4: in perspektivischer Darstellung einen vom Zwischenteil gelösten Frequenzumrichter sowie das Zwischenteil.

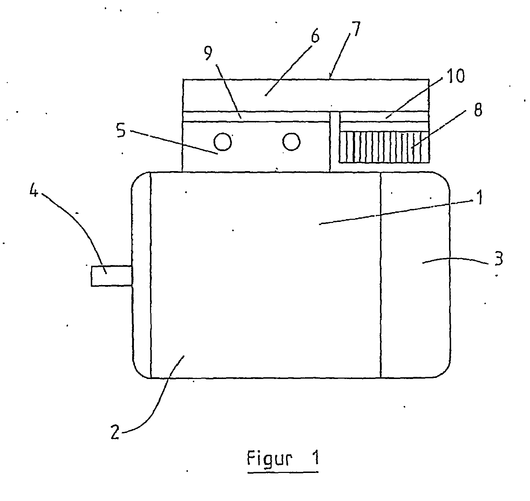

Fig. 1 zeigt in einer ersten Ausführungsform einen geschlossenen, oberflächengekühlten Elektromotor 1, der in seinem Inneren auf bekannte Weise mit einem Ständer (Stator) sowie einem Läufer versehen ist. Das Gehäuse 2 weist dabei auf der Außenseite mehrere seine Oberfläche vergrößernde Kühlrippen auf, um eine bessere Wärmeabgabe zu erzielen. B-seitig ist innerhalb einer Lüfterhaube 3 zur Belüftung des Elektromotors ein Lüfter angeordnet. An der A-Seite ist das abtreibende Motorwellenende 4 angeordnet.

An der Außenseite des Gehäuses 2 ist zwischen der A-Seite sowie der B-Seite des Elektromotors 1 ein Zwischenteil 5 angeordnet, welches den dort ansonsten vorgesehenen Klemmenkasten ersetzt und daher Anschlusselemente wie Klemmen und/oder Stecker für Versorgungs- und Signalleitungen aufweist. Das Zwischenteil 5 kann aus einem Material geringer thermischer Leitfähigkeit bestehen. An der dem Gehäuse 2 des Elektromotors 1 abgewandten Oberseite des an den Stator des Elektromotors 1 angebauten Zwischenteils 5 ist ein Gehäuse 6 eines Frequenzumrichters 7 vorgesehen, welches in Form eines Deckteils auf die Oberseite des Zwischenteils 5 dieses verschließend montiert ist. Das Gehäuse 6 überragt das Zwischenteil 5 seitlich in Richtung des B-seitigen Endes des Elektromotors 1 und weist an seiner freien Unterseite einen Kühlkörper 8 auf, der im dargestellten Ausführungsbeispiel durch Kühlrippen gebildet wird. Zwischen dem Zwischenteil 5 und dem Gehäuse 6 des Frequenzumrichters 7 ist eine flächige Wärmesperre 9, Gehäuse 6 und Zwischenteil 5 gegeneinander abdichtend, vorgesehen. Gleichermaßen ist zwischen dem Gehäuse 6 und dem Kühlkörper 8 eine weitere separate Wärmesperre 10 vorgesehen. Diese Wärmesperren 9 und 10 können dabei gleichzeitig auch als Feuchtigkeitssperren ausgebildet sein. Es ist auch möglich, zusätzliche Feuchtigkeitssperren vorzusehen. Die beiden Wärmesperren 9 und 10 bestehen vorzugsweise aus einem Material geringer thermischer Leitfähigkeit und sind flächenhaft ausgebildet.

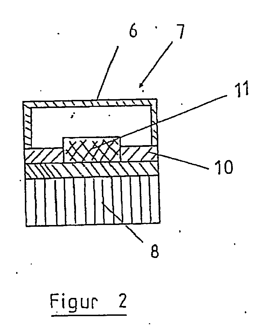

Wie Fig. 2 zu entnehmen ist, ist oberhalb des Kühlkörpers 8 die Leistungsendstufe 11 der Leistungselektronik des Frequenzumrichters 7 innerhalb der Wärmesperre 10 angeordnet. Die Signalelektronik des Frequenzumrichters 7 ist entsprechend oberhalb des Zwischenteils 5 angeordnet.

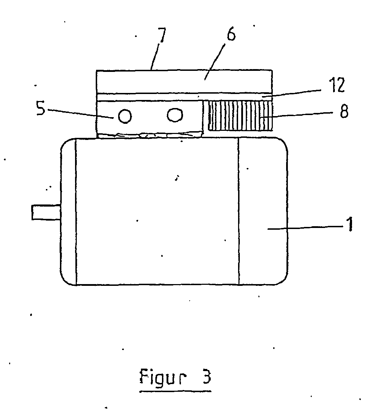

Bei der in Fig. 3 dargestellten Ausführungsform werden gleiche Bauteile mit gleichen Bezugszeichen versehen. Im Gegensatz zur vorangehenden Ausführungsform ist die 10 Wärmesperre 12 zwischen dem Gehäuse 6 und dem Zwischenteil 5 sowie dem Kühlkörper 8 bei der in Fig. 3 dargestellten Ausführungsform einteilig ausgebildet. Durch diese Zusammenfassung kann ein besonders kostengünstiger Aufbau erreicht werden.

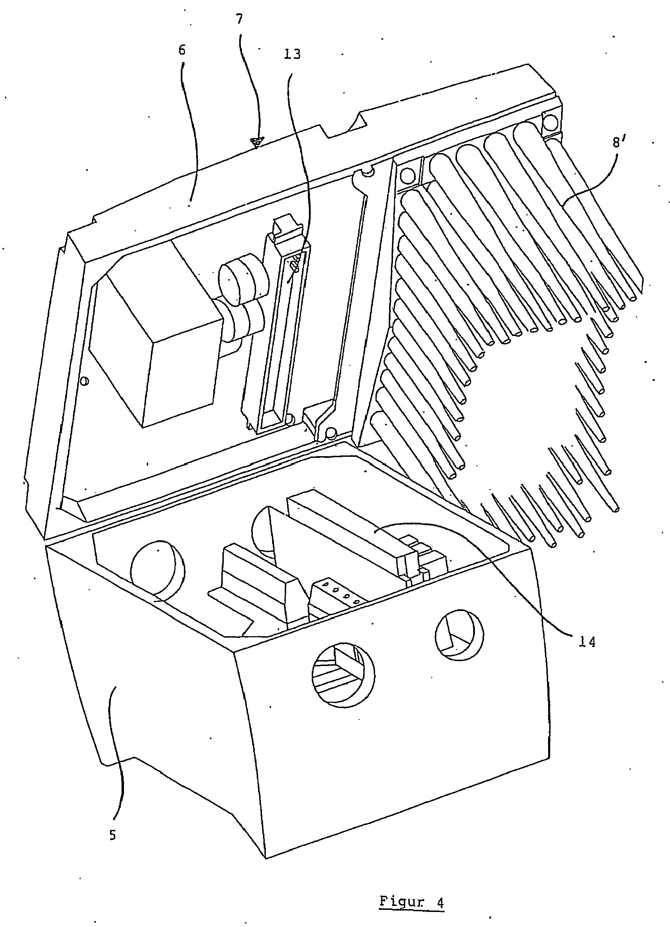

Bei dem in Fig. 4 dargestellten Ausführungsbeispiel ist der Deckel bzw. das Gehäuse 6 des Frequenzumrichters vom Zwischenteil 5 demontiert. Der Kühlkörper 8' wird hier bei diesem Ausführungsbeispiel zur Vergrößerung seiner Oberfläche durch eine Vielzahl von Kühlstäben gebildet.

Um eine elektrische Verbindung zwischen dem Frequenzumrichter 7 und dem Zwischenteil 5 zu schaffen, ist ein Steckverbinder 13, 14 vorgesehen. Der eine Teil 13 des 25 Steckverbinders ist dabei fest mit dem Frequenzumrichter 7 verbunden und der andere Teil 14 fest mit dem Zwischenteil 5.

## Patentansprüche

1. Elektromotor, umfassend
- einen Frequenzumrichter (7) mit einer Signalelektronik und einer Leistungselektronik mit Leistungsendstufe (11) zur Drehzahlsteuerung des Elektromotors (1);
- ein Gehäuse (6) des Frequenzumrichters (7), das mit einem Kühlkörper versehen ist;
- ein am Gehäuse (2) des Elektromotors (1) angeordnetes Zwischenteil (5), welches einen ansonsten dort angeordneten Klemmenkasten ersetzt und Anschlusselemente aufnimmt;
- einen mit dem Zwischenteil (5) verbundenen Steckverbinder (14) und einen mit dem Frequenzumrichter (7) verbundenen Steckverbinder (13) zum Schaffen einer elektrischen Verbindung zwischen dem Frequenzumrichter (7) und dem Zwischenteil (5),
- wobei das Gehäuse (6) des Frequenzumrichters in Form eines Deckteils ausgebildet ist und das Zwischenteil (5) auf dessen Oberseite abschließt,
- die Signalelektronik und die Leistungselektronik im Gehäuse (6) des Frequenzumrichters angeordnet sind,
- die Leistungselektronik mit dem Kühlkörper verbunden ist und
- zwischen dem den Frequenzumrichter aufnehmenden Deckteil und dem Zwischenteil (5) eine Wärmesperre vorgesehen und/oder das Zwischenteil (5) als Wärmesperre ausgebildet ist, sowie
- eine zwischen dem Deckteil und dem Kühlkörper (8) vorgesehene Wärmesperre und/oder Feuchtigkeitssperre.

2. Elektromotor nach Anspruch 1,
**dadurch gekennzeichnet, dass**
das Deckteil (6) des Frequenzumrichters (7) das Zwischenteil (5) in Längsrichtung überragt und der Kühlkörper (8, 8') unterhalb des Deckteils (6) seitlich des Zwischenteils (5) angeordnet ist.

3. Elektromotor nach Anspruch 1 oder 2,
**dadurch gekennzeichnet, dass**
die Leistungselektronik oberhalb des Kühlkörpers (8, 8') im Deckteil angeordnet ist.

4. Elektromotor nach einem der Ansprüche 1 bis 3,
**dadurch gekennzeichnet, dass**
der Kühlkörper (8) durch eine Vielzahl von Kühlrippen gebildet ist.

5. Elektromotor nach einem der Ansprüche 1 bis 3,
**dadurch gekennzeichnet, dass**
der Kühlkörper (8') durch eine Vielzahl von Kühlstäben gebildet ist.

6. Elektromotor nach einem der Ansprüche 1 bis 5,
**dadurch gekennzeichnet, dass**
das Deckteil (6) des Gehäuses (5, 6) des Frequenzumrichters (7) aus einem Material hoher thermischer Leitfähigkeit ist.

7. Elektromotor nach einem der Ansprüche 1 bis 6,
**dadurch gekennzeichnet, dass**
eine Steckverbindungsteil (13) des Steckverbinders (13, 14) fest mit dem Frequenzumrichter (7) und das andere (14) fest mit dem Zwischenteil (5) verbunden ist.

8. Elektromotor nach einem der Ansprüche 1 bis 7,
**gekennzeichnet durch**
im Zwischenteil (5) vorgesehene Einrichtung zur Funkentstörung.

9. Elektromotor nach einem der Ansprüche 1 bis 8,
**gekennzeichnet durch**
separate Wärmesperren (9, 10) zwischen dem Deckteil und dem Kühlkörper (8) einerseits und dem Zwischenteil (5) andererseits.

10. Elektromotor nach einem der Ansprüche 1 bis 9,
**gekennzeichnet durch**
zumindest eine zwischen dem Deckteil und dem Zwischenteil (5) vorgesehene Feuchtigkeitssperre.

11. Elektromotor nach Anspruch 10,
**dadurch gekennzeichnet, dass**
die Wärmesperre (9, 10, 12) und Feuchtigkeitssperren eine Funktionseinheit bilden.

12. Elektromotor nach einem der Ansprüche 1 bis 11,
**dadurch gekennzeichnet, dass**
das Zwischenteil (5) aus einem Material geringer thermischer Leitfähigkeit ist.

13. Elektromotor nach einem der Ansprüche 1 bis 12,
**dadurch gekennzeichnet, dass**
das Deckteil (6) als Feuchtigkeitssperre ausgebildet ist.

14. Elektromotor nach einem der vorhergehenden Ansprüche,
**dadurch gekennzeichnet, dass**
die Wärme- oder Feuchtigkeitssperren dichtend zwischen dem Deckteil (6) und dem Zwischenteil (5) bzw. Kühlkörper (7) angebracht wird.

15. Elektromotor nach einem der vorangehenden Ansprüche,
**dadurch gekennzeichnet, dass**
das Deckteil (6) auf das Zwischenteil (5) als Unterteil, dieses verschließend, aufgesetzt ist.
